(19) Europäisches Patentamt / European Patent Office / Office européen des brevets

(11) **EP 4 641 488 A1**

(12) **EUROPEAN PATENT APPLICATION**

(43) Date of publication:
**29.10.2025 Bulletin 2025/44**

(51) International Patent Classification (IPC):
**G06T 7/00** (2017.01)  **G06T 7/11** (2017.01)
**G06T 7/136** (2017.01)  **G06T 7/155** (2017.01)

(21) Application number: 24382433.1

(22) Date of filing: **23.04.2024**

(52) Cooperative Patent Classification (CPC):
**G06T 7/0012; G06T 7/11; G06T 7/136; G06T 7/155;**
G06T 2207/10081; G06T 2207/20084;
G06T 2207/30101

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Fundación Pública Galega de Investigación Biomédica Galicia Sur**
  **36312 Vigo (ES)**
• **Servizo Galego De Saúde**
  **15703 Santiago de Compostela (ES)**

(72) Inventors:
• **Veiga García, César Gabriel**
  **36312 Vigo (ES)**

• **Campanioni Morfi, Silvia**
  **36312 Vigo (ES)**
• **Salvadores, Pablo Juan**
  **36312 Vigo (ES)**
• **Busto Castiñeira, Laura**
  **36312 Vigo (ES)**
• **González Novoa, José Antonio**
  **36312 Vigo (ES)**
• **Íñiguez Romo, Andrés**
  **15781 Santiago de Compostela (ES)**
• **Jimenez Díaz, Víctor Alfonso**
  **15781 Santiago de Compostela (ES)**

(74) Representative: **Clarke, Modet y Cía., S.L.**
  **C/ Suero de Quiñones 34-36**
  **28002 Madrid (ES)**

Remarks:
Amended claims in accordance with Rule 137(2) EPC.

(54) **SYSTEM AND COMPUTER-IMPLEMENTED METHOD OF DETERMINING A CALCIUM THRESHOLD FOR DETECTING CALCIFIED PLAQUES IN COMPUTED TOMOGRAPHY SCANS**

(57)    System and computer-implemented method of determining a calcium threshold for detecting calcified plaques in computed tomography scans. The method (100) comprises:

receiving (110) input images (102) of a CT scan;

detecting (120) the aorta (401) in the input images (102), obtaining a volume of interest of the aorta, VOIA (122), formed by a plurality of voxels;

performing a mathematical morphology dilation (130) on the VOIA (122), obtaining a volume of interest of the dilated aorta, VOIDA (132);

calculating (140) a histogram (142) of the VOIDA (132) including the frequency of voxels per HU value;

fitting (150) the histogram (142) to a Gaussian curve (152);

computing (160) the derivative (162) of the Gaussian curve (152); and

determining (170) a calcium threshold (172) corresponding to the HU value in which the derivative (162) of the Gaussian curve surpasses a threshold (TH) while having a positive slope.

The method may further comprise detecting and/or quantifying (180) calcified plaques (182) in a CT scan using the calcium threshold (172).

FIG. 3

## Description

### FIELD

The present invention relates to a system and method of determining a calcium threshold used for detecting and/or quantifying calcium plaques in cardiovascular vessels, such as the aorta or coronary vessels, in computed tomography (CT) scans.

### BACKGROUND

It is widely recognized that arterial calcification is associated with a higher likelihood of negative cardiovascular occurrences, and therefore it is important to know the degree of arterial calcification. The evaluation of aortic calcium burden is also relevant when planning structural heart procedures, as transcatheter aortic valve implantation (TAVI) or left atrial appendage closure, since quantifying aortic calcium allows predicting post-TAVI complications, as could be the paravalvular regurgitation.

Multiple approaches to measure the extent of arterial calcification have been proposed. Calcium assessment based on CT scans is a well-known and widely used approach. CT scans can be performed with or without contrast agent in patients. In the noncontrast-enhanced CT (NCE-CT) scans there is an unequivocal equivalence between the Hounsfield Unit (HU) value and the scanned tissue, as detailed in the following table:

| Substance | HU value |
|---|---|
| Air | -1000 |
| Lung | -500 |
| Fat | -100 to -50 |
| Water | 0 |
| Cerebrospinal fluid | 15 |
| Renal Parenchyma | 30 |
| Blood | +30 to +45 |
| Muscle | +10 to +40 |
| Brain (Grey matter) | +37 to +45 |
| Brain (White matter) | +20 to +30 |
| Liver | +40 to +60 |
| Soft tissue, IV Contrast | +100 to +300 |
| Trabecular bone | +700 |
| Cortical Bone | +2000 to +3000 |

The HU value (or CT number) is the linear attenuation coefficient measured by the CT scan expressed in the Hounsfield scale, a quantitative scale for describing radiodensity in which the radiodensity of distilled water is 0 HU and the radiodensity of air is -1000 HU. In NCE-CT scans, the calcium volume is quantified by registering voxels with attenuation values equal or greater than 130 HU (the arterial tissue has lower HU values than the HU value of calcium).

The administration of contrast agents increases the quality of images for specific purposes, and it is a common procedure in several thoracoabdominal CT imaging studies, but it poses a challenge regarding the standardization and determination of calcium. The introduction of contrast agents modifies the HU values in studies that are associated with tissues. Thus, with contrast the HU value of each tissue is arbitrary, the contrast agent introduces variability in the HU values.

Although a robust golden standard methodology is available for calcium evaluation on NCE-CT scans (voxels with $HU \geq 130$ correspond to calcium), a standard reference for calcium assessment on contrast-enhanced computed tomography (CE-CT) scans is currently lacking. Therefore, CT contrast media enhances the visualization of blood vessels but at the same time also complicates the measurement of calcification.

CE-CT produces diverse enhancements in the aorta that cannot be easily attributed solely to demographic or scan protocol factors. Applying uniform thresholds for detecting calcified plaques in CE-CT scans results in a high rate of classification errors of the volumes (voxels) of the CT scans.

The present invention reduces these errors by implementing dynamic thresholds based on local aorta attenuation.

### SUMMARY

The invention relates to a system and a computer-implemented method of determining a calcium threshold for detecting calcified plaques in computed tomography scans. The determined calcium threshold can be used to detect calcified plaques in CE-CT scans with more precision, since the classification errors caused by applying uniform thresholds are reduced.

The method comprises receiving a plurality of input images of a thoracoabdominal CT scan; detecting the aorta in the input images, obtaining a volume of interest of the aorta, VOIA, formed by a plurality of voxels; performing a mathematical morphology dilation on the VOIA, obtaining a volume of interest of the dilated aorta, VOIDA; calculating a histogram of the VOIDA, the histogram including the frequency of voxels in the VOIDA per Hounsfield Unit value of the CT scan; fitting the histogram to a Gaussian curve; computing the derivative of the Gaussian curve; and determining a calcium threshold corresponding to the Hounsfield Unit value in which the derivative of the Gaussian curve surpasses a threshold while having a positive slope.

The present invention also refers to a system with a data processing unit configured to carry out the steps of the method, and a computer program product comprising instructions which, when the program is executed by a computer, cause the computer to carry out the steps of the method.

## BRIEF DESCRIPTION OF THE DRAWINGS

A series of drawings which aid in better understanding the invention and which are expressly related with an embodiment of said invention, presented as a non-limiting example thereof, are very briefly described below.

Figure 1 shows the negative effects of selecting uniform calcium thresholds in CE-CT scans.

Figure 2 is an example showing the high variability of HU values in CE-CT scans.

Figure 3 is a flowchart of the method of the present invention.

Figure 4 depicts an example of the aorta segmentation.

Figure 5 shows the process to obtain the volume of interest of the aorta (VOIA) in different slices according to an embodiment.

Figure 6 depicts the volume of interest of the dilated aorta (VOIDA) after applying a mathematical morphology dilation.

Figure 7 is an example showing the difference between the VOIA and VOIDA histograms.

Figure 8 depicts the Gaussian curve that fits the VOIDA histogram.

Figure 9 depicts the derivative of the Gaussian curve of Figure 8.

Figure 10 shows the determination of the calcium threshold CaTH in the derivative of the Gaussian curve of Figure 9.

Figure 11 represents a 3D reconstruction of the detected calcified plaques in the VOIDA of Figure 6.

Figure 12 is a table illustrating the results of the method of the present invention applied to three different CE-CT scan series acquired from the same patient using different contrast agents.

Figure 13 depicts a schematic diagram of the system of the present invention in accordance with an embodiment.

## DETAILED DESCRIPTION

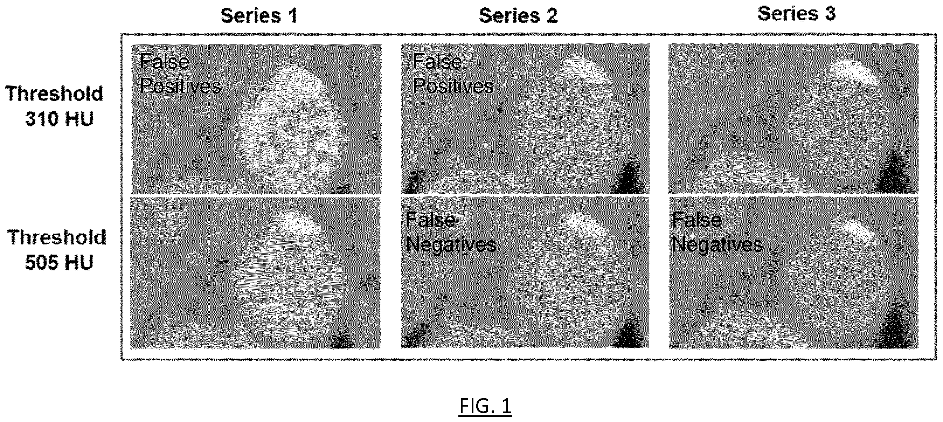

**Figure 1** illustrates an example of the negative effects of selecting uniform calcium thresholds for detecting calcified plaques on the same cross-section of the aorta in three different CE-CT scan series (Series 1, Series 2, Series 3) of a same patient. The depicted cross-sections are overlapped with threshold segmentation using 310 and 505 Hounsfield Unit (HU) values for thresholding.

When selecting a first calcium threshold of 310 HU, calcified plaques in series 3 are correctly detected but Series 1 and Series 2 show false positives, whereas when selecting a second calcium threshold of 505 HU, calcified plaques in Series 1 are adequately identified but Series 2 and Series 3 show false negatives.

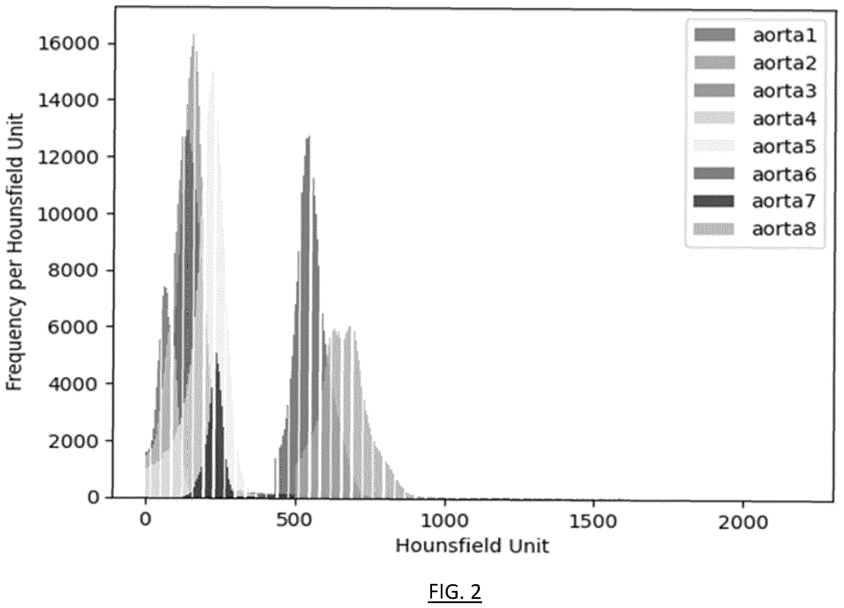

**Figure 2** shows another example of the variability of HU values in CE-CT scans. The introduction of a contrast agent modifies the dynamic range (in HU) of the CT scan. Figure 2 provides an example of this effect on the histogram of the volume of interest of the aorta (VOIA) for 8 different patients ("aorta 1", ..., "aorta 8"). The histogram represents in the Y-axis the frequency of voxels in the VOIA per HU value (X-axis) of the CT scan, showing for instance that for the CT scan of patient 6 ("aorta 6") there are more than 12000 voxels in the range of 520-540 HU. The contrast generates a "shifting" effect in the HU values (X-axis), rendering the automation of the calcium threshold value determination very difficult to achieve.

These examples prove the high variability introduced by the contrast agent in the HU values, so that a different threshold for each CE-CT scan series should be determined. The golden rule in NCE-CT scans (calcium threshold is set to 130 HU) does not work when the patient has contrast, and nowadays the clinicians look for a calcium threshold value experimentally for each CE-CT scan, based on his experience and on how calcified structures should appear in the region of interest, manually modifying the calcium threshold until any calcium lesions of interest appear.

When trying to detect calcified plaques in CE-CT scans using fixed CT thresholds there is a high chance of incorrectly classifying the voxels. However, this can be reduced by using dynamic calcium thresholds based on the local attenuation of the aorta.

The present invention automatically identifies the calcium threshold to be used in each thoracoabdominal CT scan. Once the calcium threshold is determined, it can be applied to detect and/or quantify calcified plaques in cardiovascular vessels present in the corresponding thoracoabdominal CT scan, which is preferably a CE-CT scan, although the identified calcium threshold would also work on NCE-CT scans.

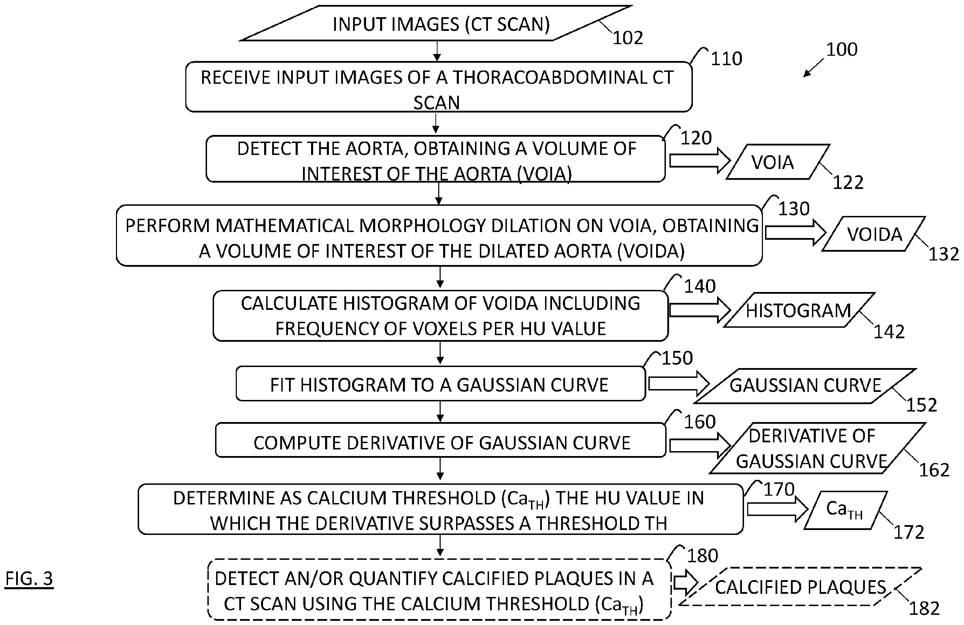

The present invention refers to a system and computer-implemented method of determining a calcium threshold for detecting calcified plaques in the vascular vessels using CT scans. The method 100 comprises the following steps, depicted in **Figure 3:**

- Receiving 110 a plurality of input images 102 of a thoracoabdominal CT scan.

- Detecting 120 the aorta in the input images 102, obtaining a volume of interest of the aorta, VOIA 122, formed by a plurality of voxels.

- Performing 130 a mathematical morphology dilation on the VOIA, obtaining a volume of interest of the dilated aorta, VOIDA 132.

- Calculating 140 a histogram 142 of the VOIDA 132, the histogram 142 including the frequency of voxels in the VOIDA 132 per HU value of the CT scan.

- Fitting 150 the histogram 142 to a Gaussian curve 152.

- Computing 160 the derivative 162 of the Gaussian curve 152.

- Determining 170 a calcium threshold 172 ($Ca_{TH}$) corresponding to the HU value in which the derivative 162 of the Gaussian curve 152 surpasses a threshold (TH) while having a positive slope.

In an embodiment, the threshold (TH) is a predetermined value. In another embodiment the threshold (TH) is a value in which the derivative 162 of the Gaussian curve changes from abrupt ascending to asymptotic convergence. This sudden change can be detected, for instance, using the following process:

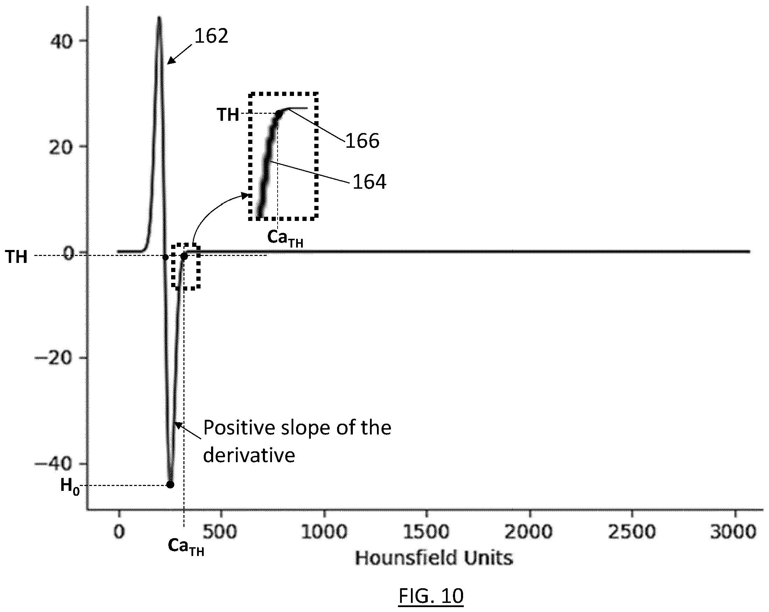

- The first step is to identify the point of minimum value on the derivative curve ($H_0$), depicted in Figure 10.

- From that point, there are two well-defined segments on the curve: an abrupt ascending segment 164 with positive slope and a second segment of asymptotic convergence 166. The threshold TH, and the corresponding sought-after point ($Ca_{TH}$), is arranged where these segments (164,166) join.

- There are different ways to identify this point. In an embodiment, once the minimum value (Ho) has been identified, iterative searching is carried out over Hounsfield units (the horizontal axis) greater than $H_0$ to find the first value from which the derivative 162 ceases to increase abruptly. In an embodiment the criterion for this search is given by the expression $\rho$ (eq. A), which measures the variation of the derivative curve ($\partial$) with respect to HUs, evaluating the mean values of i neighbors, selecting the first point found with a $\rho$ value ($\rho0$) within the range of [0.1, 0]. The parameters i (maximum number of elements for the mean) and $\rho0$ can be defined by the user. Initially, the following values are proposed: i = 5 and $\rho0$ = 0 (although other values may be used).

$$\rho = \frac{\sum_{n=1}^{i} |\partial_n - \partial_{n-1}|}{i} \quad \text{(eq. A)}$$

Once the calcium threshold 172 has been determined, the method may further comprise (shown within dash lines) detecting and/or quantifying 180 calcified plaques 182 in a CT scan using the calcium threshold 172. For instance, calcified plaques in the aorta may be detected or quantified by determining or counting the voxels in the VOIDA having a Hounsfield Unit value higher than the calcium threshold 172. The calcium threshold may be used to detect calcified plaques 182 in other cardiovascular vessel rather than the aorta, such as coronary vessels present in the thoracoabdominal CT scan received or in subsequent CT scans of the same patient. As a result, the aorta present in the thoracoabdominal CT scan received is used for determining a calcium threshold, but this calcium threshold can later be used for calcium analysis purposes on other cardiovascular vessels present in the same CT scan received or any other organ structure within the same study.

To detect the aorta in the input images 102 of the CT scan, the aorta may be segmented using a deep learning segmentation technique, such as the one described in "TotalSegmentator: Robust segmentation of 104 anatomical structures in CT images", Wasserthal et al., 2022, or any other known image detection algorithm.

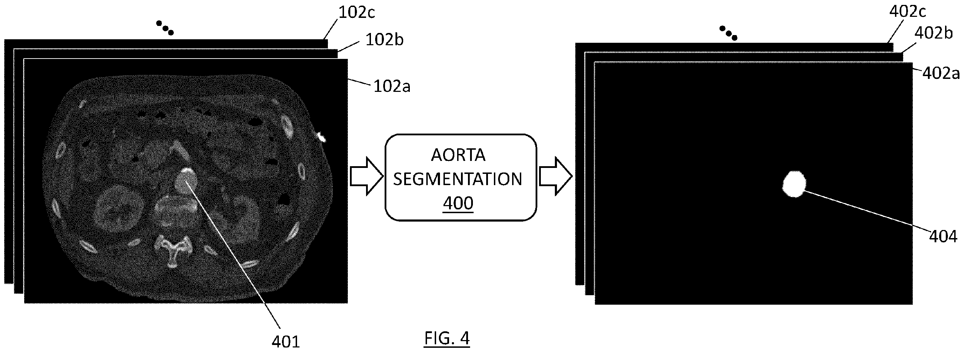

**Figure 4** is an example of the aorta segmentation 400 performed on a plurality of input images (102a, 102b, 102c,...), which correspond to slices at different depths z of the CT scan. The result of the aorta segmentation 400 is a binary mask (402a, 402b, 402c,...) for each input image (102a, 102b, 102c,...) with a value of one (white pixels) in an area 404 corresponding to the detection of the aorta 401 in each input image and a value of zero (black pixels) in the rest of the areas of the image.

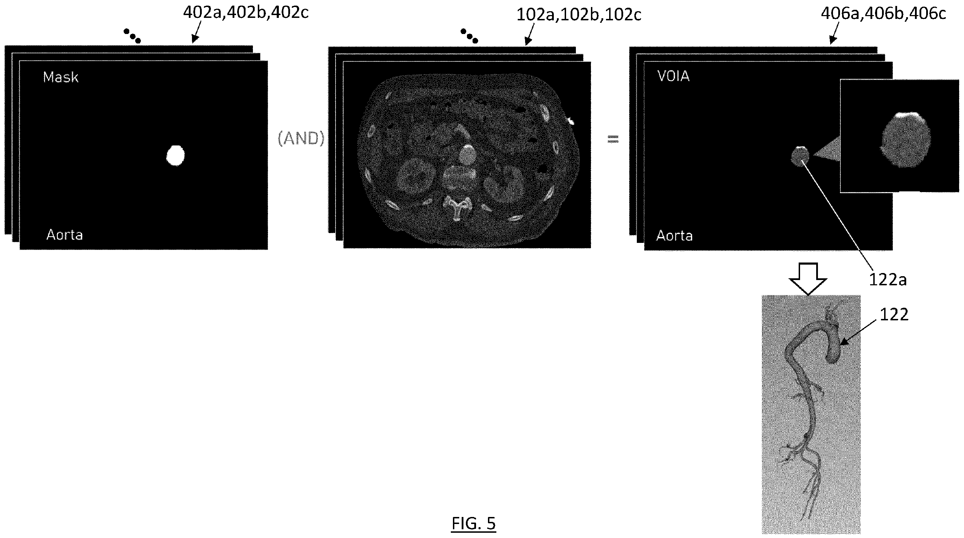

Then, a logical AND operator between the binary mask (402a, 402b, 402c,...) and the corresponding input image (102a, 102b, 102c,...) is implemented (**Figure 5**) to obtain the information related to the HU values in the aorta 401. As a result of this procedure, the volume of interest of the aorta in different slices (406a, 406b, 406c,...) is obtained (Figure 5 depicts the VOIA 122a corresponding to slice 406a), with a value of zero (black pixels) outside the VOIA, while the original pixel values within the VOIA are preserved. With the slices (406a, 406b, 406c,...) at different depths a 3D reconstruction of the lumen of the contrasted aorta, corresponding to the VOIA 122, can be obtained using a suitable software tool for rendering and manipulating medical images in three dimensions, such as 3D Slicer.

To obtain a dilated volume of the aorta, mathematical morphology (as described for instance in Serra J., "Image Analysis and Mathematical Morphology", Academic Press, London, United Kingdom, 1982) is applied to expand the volume of interest of the aorta, VOIA 122, and ensure the inclusion of possible calcifications present in the aorta segmentation. Mathematical morphology is a set of techniques used to analyze and process images by manipulating their shape and structure. These techniques provide tools for transforming images, considering their geometry and structural characteristics. Dilation is a morphological operator used to increase the size of objects in an image by adding pixels to their boundaries. It can be represented by the following equation, where $D$ represents the resulting image after dilation, $I$ is the original image, and k is the structural element used for dilation, known as the kernel:

$$D\ (I,\ k) = (I \oplus k)$$

The dilation operator $\oplus$ adds pixels around each point in $I$ based on the shape and size defined by $k$. In an embodiment, the SciPy library was utilized for implementing the dilation process, using a kernel of size 7x7x7, expanding each pixel in the image by considering a neighborhood of 7x7x7 pixels. By performing the dilation of the aorta, the inclusion of potential calcified regions that could have been excluded in the initial segmentation is ensured.

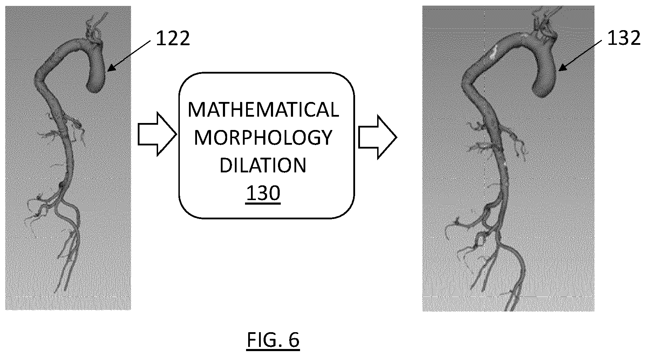

**Figure 6** shows the 3D reconstruction of the volume of interest of the dilated aorta, VOIDA 132, which is obtained by performing mathematical morphology dilation 130 on the VOIA 122 using a 3x3x3 dilate kernel.

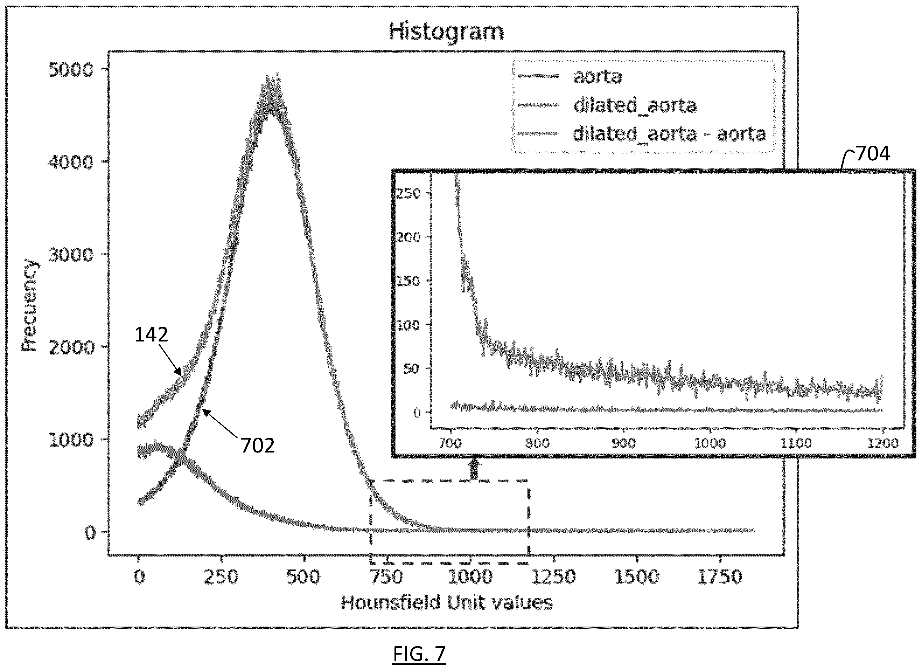

In a next step of the method 100, a histogram 142 of the VOIDA 132 is calculated 140, the histogram 142 showing the frequency of voxels in the VOIDA 132 per HU value of the CT scan. When comparing the histogram 142 of the VOIDA 132 and the histogram 702 of the VOIA 122 in an example depicted in **Figure 7,** the difference between them is evident. Even though it is subtle, there are new pixels present in the enlarged area 704 of the image, which correspond to potential calcium values. Without performing dilation, these values would be lost.

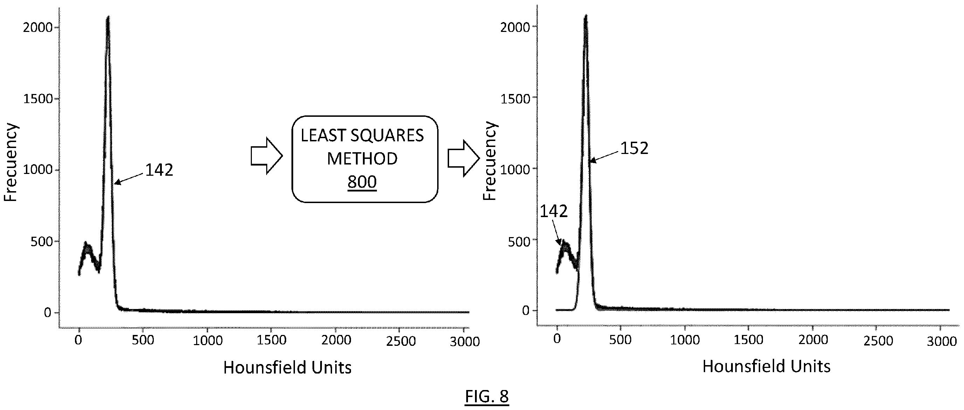

Once the histogram 142 of the VOIDA 132 is obtained, the histogram 142 is fitted 150 to a Gaussian curve 152, as shown in the example of **Figure 8.** The goal is to determine the optimal values of the parameters $\mu$ and $\sigma^2$ of a normal distribution that best align with the histogram data, these parameters respectively representing the mean and variance of the HU values obtained from the VOIDA 132. In an embodiment, the least squares method 800 is used to find the optimal values of the parameters (e.g. using the "lmfit" library), although other fitting algorithm may be employed. The iterative process involves adjusting the parameters and evaluating the disparity between the fitted curve and the histogram data. This cycle continues until the values minimizing the difference and providing the best fit to the Gaussian curve 152 are obtained.

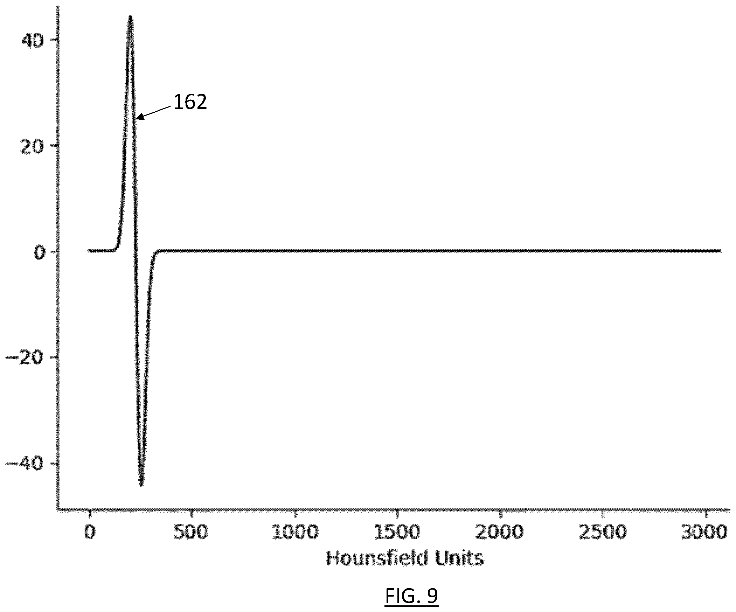

After obtaining the fitted Gaussian curve 152 from the histogram 142 of the VOIDA 132, the derivative 162 of the curve is computed 160 to identify the curve variability. **Figure 9** depicts the derivative 162 of the Gaussian curve 152 of Figure 8.

The histogram 142 is obtained on a volume of interest of the dilated aorta, which contains voxels with contrasted blood (corresponding to the VIOA 122) and a dilated region including potential voxels of arterial tissue (darker points on the left side of the histogram 142) and calcium (brighter voxels on the right side of the histogram 142). The eventual presence of calcium voxels will produce a variability on the slope of the Gaussian curve 152, gathered by the Gaussian derivative 162. In the context of finding the calcium threshold 172, the aim is to identify the point where the slope of the Gaussian curve 152 stops decreasing and remains constant. Before this point, the values of the derivative 162 (i.e. the slope of the Gaussian curve 152) will be negative, indicating a decrease in the Gaussian curve 152 values. Once the values of the derivative 162 becomes close to zero and remain constant, the calcium threshold is found. This threshold can be considered as a lower limit from which HU values correspond to the presence of calcium in the tissue.

**Figure 10** shows the step of determining 170 a calcium threshold $Ca_{TH}$ 172 in the derivative 162 of the Gaussian curve 152 of Figure 9. The calcium threshold $Ca_{TH}$ 172 corresponds to the HU value in which the derivative 162 surpasses a threshold TH. As depicted in Figure 10, there are two HU values (shown with two dots) in which the derivative 162 surpasses the threshold TH. The calcium threshold $Ca_{TH}$ 172 is the one for which the derivative 162 has a positive slope (i.e. the values of the derivative 162 are increasing and getting close to zero). In an embodiment, the threshold TH is a configurable parameter with a value close to zero, preferably within the range of [-2, 0]. In another embodiment, the threshold TH is obtained iteratively.

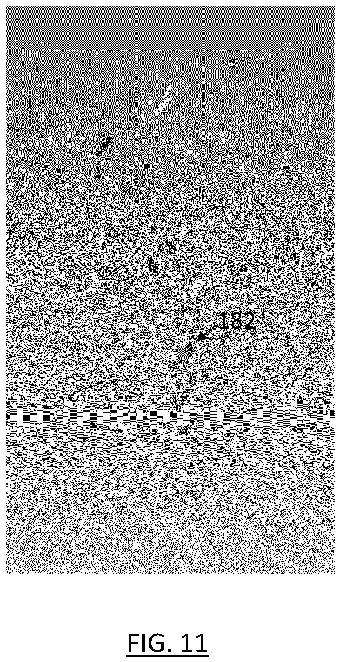

Once the calcium threshold is identified, it can be used to detect 180 calcified plaques 182 in the CT scan, for instance in the aorta itself. In this case the calcified plaques 182 correspond to the voxels in the VOIDA 132 with a HU value higher than the calcium threshold 172. **Figure 11** represents a 3D reconstruction of the detected calcified plaques 182 in the VOIDA 132 of Figure 6.

The quantification of the calcium in the aorta, representing the arterial damage, or any other cardiovascular vessel can be carried out by counting the number of voxels in the CT scan above the calcium threshold 172. The value, shape and/or size of said voxels can be weighted in a final score of the quantification, using any of the different calcification scores that are employed in the assessment of patients with coronary heart disease (e.g., Agatston score, Volume Score, Mass Score). The total volume of calcium identified in the VOIDA 132 may be computed, by converting the measured voxel units (number of voxels above the calcium threshold 172) in volume ($mm^3$).

The quantification of aortic calcium may include determining the number of calcium islands (or lesions) identified, each calcium island being formed by a group of connected voxels that are separated (i.e. not connected) from other groups of connected voxels, as well as the average calcium island size and/or the HU mean value of the calcium island.

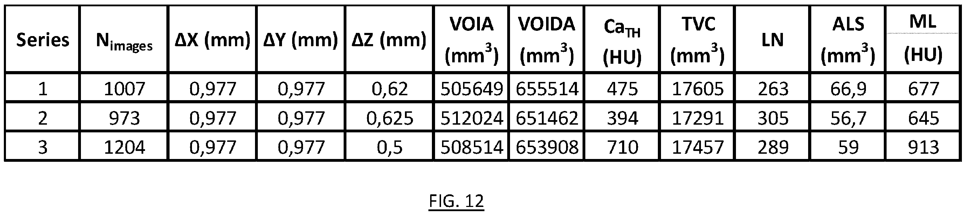

**Figure 12** shows the results of the method 100 applied to three different CE-CT scan series acquired from a same patient using different contrast agents, in which $N_{images}$ represents the number of images of the series, $\Delta X$ and $\Delta Y$ the size of the voxels in the X and Y axes (in mm), $\Delta Z$ the thickness of the slices (in mm), TVC the total volume of calcium (in $mm^3$), LN the number of calcium lesions (islands), ALS the average lesion size (in $mm^3$), and ML (HU) the mean lesion value in HU.

In these results it can be observed that the calcium threshold $Ca_{TH}$ has great variability in the series, due to the "shifting" effect in the HU values generated by the contrast. However, the method 100 automatically detects the appropriate calcium threshold for each series, so that the total volume of calcium (TVC) identified in the three series is almost the same, proving that the method 100 of determining a calcium threshold is robust and works fine irrespective of the contrast agent employed.

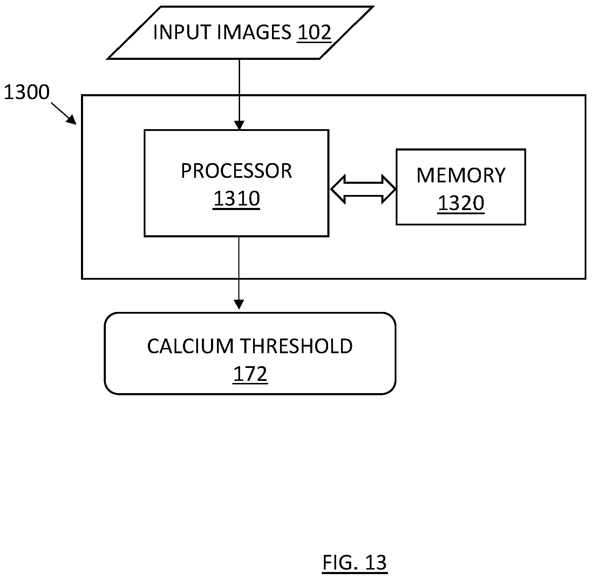

In accordance with a further aspect of the present invention there is provided a system for determining a calcium threshold for detecting calcified plaques in computed tomography scans. **Figure 13** depicts an exemplary embodiment of the system 1300, which comprises a data processing unit, such as one or more processors 1310 (e.g. a CPU and/or a GPU) and a memory 1320, configured to execute the steps of the aforementioned method.

## Claims

1. A computer-implemented method of determining a calcium threshold for detecting calcified plaques in computed tomography scans, the method (100) comprising:

   receiving (110) a plurality of input images (102) of a thoracoabdominal CT scan;
   detecting (120) the aorta (401) in the input images (102), obtaining a volume of interest of the aorta, VOIA (122), formed by a plurality of voxels;
   performing a mathematical morphology dilation (130) on the VOIA (122), obtaining a volume of interest of the dilated aorta, VOIDA (132);
   calculating (140) a histogram (142) of the VOIDA (132), the histogram (142) including the frequency of voxels in the VOIDA (132) per Hounsfield Unit value of the CT scan;
   fitting (150) the histogram (142) to a Gaussian curve (152);
   computing (160) the derivative (162) of the Gaussian curve (152); and

determining (170) a calcium threshold (172) corresponding to the Hounsfield Unit value in which the derivative (162) of the Gaussian curve surpasses a threshold (TH) while having a positive slope.

2. The computer-implemented method of claim 1, further comprising detecting and/or quantifying (180) calcified plaques (182) in a CT scan using the calcium threshold (172).

3. The computer-implemented method of any of previous claims, wherein the thoracoabdominal CT scan is contrast-enhanced.

4. The computer-implemented method of any of previous claims, wherein the threshold (TH) is a predetermined value comprised within the range of [-2, 0].

5. The computer-implemented method of any of claims 1 to 3, wherein the threshold (TH) corresponds to a value in which the derivative (162) of the Gaussian curve (152) changes from abrupt ascending (164) to asymptotic convergence (166).

6. A system for determining a calcium threshold for detecting calcified plaques in computed tomography scans, the system comprising a data processing unit (1310) configured to:

   receive a plurality of input images (102) of a thoracoabdominal CT scan;
   detect the aorta (401) in the input images (102), obtaining a volume of interest of the aorta, VOIA (122), formed by a plurality of voxels;
   perform a mathematical morphology dilation (130) on the VOIA (122), obtaining a volume of interest of the dilated aorta, VOIDA (132);
   calculate a histogram (142) of the VOIDA (132), the histogram (142) including the frequency of voxels in the VOIDA (132) per Hounsfield Unit value of the CT scan;
   fit the histogram (142) to a Gaussian curve (152);
   compute the derivative (162) of the Gaussian curve (152); and
   determine a calcium threshold (172) corresponding to the Hounsfield Unit value in which the derivative (162) of the Gaussian curve surpasses a threshold (TH) while having a positive slope.

7. The system of claim 6, wherein the data processing unit is further configured to detect and/or quantify calcified plaques (182) in a CT scan using the calcium threshold (172).

8. The system of any of claims 6 to 7, wherein the thoracoabdominal CT scan is contrast-enhanced.

9. The system of any of claims 6 to 8, wherein the threshold (TH) is a predetermined value comprised within the range of [-2, 0].

10. The system of any of claims 6 to 8, wherein the threshold (TH) corresponds to a value in which the derivative (162) of the Gaussian curve (152) changes from abrupt ascending (164) to asymptotic convergence (166).

11. A computer program product comprising instructions which, when the program is executed by a computer, cause the computer to carry out the steps of the method of any of claims 1 to 5.

12. A computer-readable storage medium having stored thereon the computer program product of claim 11.

**Amended claims in accordance with Rule 137(2) EPC.**

1. A computer-implemented method of determining a calcium threshold for detecting calcified plaques in computed tomography scans, the method (100) comprising:

    receiving (110) a plurality of input images (102) of a thoracoabdominal CT scan;
    detecting (120) the aorta (401) in the input images (102), obtaining a volume of interest of the aorta, VOIA (122), formed by a plurality of voxels;
    performing a mathematical morphology dilation (130) on the VOIA (122), obtaining a volume of interest of the dilated aorta, VOIDA (132);

    **characterized in that** the method (100) further comprises:

    calculating (140) a histogram (142) of the VOIDA (132), the histogram (142) including the frequency of voxels in the VOIDA (132) per Hounsfield Unit value of the CT scan;
    fitting (150) the histogram (142) to a Gaussian curve (152);
    computing (160) the derivative (162) of the Gaussian curve (152); and
    determining (170) a calcium threshold (172) corresponding to the Hounsfield Unit value in which the derivative (162) of the Gaussian curve surpasses a threshold (TH) while having a positive slope.

2. The computer-implemented method of claim 1, further comprising detecting and/or quantifying

(180) calcified plaques (182) in a CT scan using the calcium threshold (172).

3. The computer-implemented method of any of previous claims, wherein the thoracoabdominal CT scan is contrast-enhanced.

4. The computer-implemented method of any of previous claims, wherein the threshold (TH) is a predetermined value comprised within the range of [-2, 0].

5. The computer-implemented method of any of claims 1 to 3, wherein the threshold (TH) corresponds to a value in which the derivative (162) of the Gaussian curve (152) changes from abrupt ascending (164) to asymptotic convergence (166).

6. A system for determining a calcium threshold for detecting calcified plaques in computed tomography scans, the system comprising a data processing unit (1310) configured to:

    receive a plurality of input images (102) of a thoracoabdominal CT scan;
    detect the aorta (401) in the input images (102), obtaining a volume of interest of the aorta, VOIA (122), formed by a plurality of voxels;
    perform a mathematical morphology dilation (130) on the VOIA (122), obtaining a volume of interest of the dilated aorta, VOIDA (132);

    **characterized in that** the data processing unit (1310) is further configured to:

    calculate a histogram (142) of the VOIDA (132), the histogram (142) including the frequency of voxels in the VOIDA (132) per Hounsfield Unit value of the CT scan;
    fit the histogram (142) to a Gaussian curve (152);
    compute the derivative (162) of the Gaussian curve (152); and
    determine a calcium threshold (172) corresponding to the Hounsfield Unit value in which the derivative (162) of the Gaussian curve surpasses a threshold (TH) while having a positive slope.

7. The system of claim 6, wherein the data processing unit is further configured to detect and/or quantify calcified plaques (182) in a CT scan using the calcium threshold (172).

8. The system of any of claims 6 to 7, wherein the thoracoabdominal CT scan is contrast-enhanced.

9. The system of any of claims 6 to 8, wherein the threshold (TH) is a predetermined value comprised within the range of [-2, 0].

10. The system of any of claims 6 to 8, wherein the threshold (TH) corresponds to a value in which the derivative (162) of the Gaussian curve (152) changes from abrupt ascending (164) to asymptotic convergence (166).

11. A computer program product comprising instructions which, when the program is executed by a computer, cause the computer to carry out the steps of the method of any of claims 1 to 5.

12. A computer-readable storage medium having stored thereon the computer program product of claim 11.

FIG. 1

FIG. 2

EP 4 641 488 A1

FIG. 3

INPUT IMAGES (CT SCAN) ⟋102

100

RECEIVE INPUT IMAGES OF A THORACOABDOMINAL CT SCAN ⟋110

DETECT THE AORTA, OBTAINING A VOLUME OF INTEREST OF THE AORTA (VOIA) ⟋120 → VOIA ⟍122

PERFORM MATHEMATICAL MORPHOLOGY DILATION ON VOIA, OBTAINING A VOLUME OF INTEREST OF THE DILATED AORTA (VOIDA) ⟋130 → VOIDA ⟍132

CALCULATE HISTOGRAM OF VOIDA INCLUDING FREQUENCY OF VOXELS PER HU VALUE ⟋140 → HISTOGRAM ⟍142

FIT HISTOGRAM TO A GAUSSIAN CURVE ⟋150 → GAUSSIAN CURVE ⟍152

COMPUTE DERIVATIVE OF GAUSSIAN CURVE ⟋160 → DERIVATIVE OF GAUSSIAN CURVE ⟍162

DETERMINE AS CALCIUM THRESHOLD ($Ca_{TH}$) THE HU VALUE IN WHICH THE DERIVATIVE SURPASSES A THRESHOLD TH ⟋170 → $Ca_{TH}$ ⟍172

DETECT AN/OR QUANTIFY CALCIFIED PLAQUES IN A CT SCAN USING THE CALCIUM THRESHOLD ($Ca_{TH}$) ⟋180 → CALCIFIED PLAQUES ⟍182

EP 4 641 488 A1

AORTA SEGMENTATION 400

FIG. 4

FIG. 5

MATHEMATICAL MORPHOLOGY DILATION
130

132

122

FIG. 6

FIG. 7

FIG. 8

FIG. 9

FIG. 10

EP 4 641 488 A1

EP 4 641 488 A1

FIG. 11

| Series | N_images | ΔX (mm) | ΔY (mm) | ΔZ (mm) | VOIA (mm³) | VOIDA (mm³) | Ca_TH (HU) | TVC (mm³) | LN | ALS (mm³) | ML (HU) |
|--------|----------|---------|---------|---------|------------|-------------|------------|-----------|-----|-----------|---------|
| 1 | 1007 | 0,977 | 0,977 | 0,62 | 505649 | 655514 | 475 | 17605 | 263 | 66,9 | 677 |
| 2 | 973 | 0,977 | 0,977 | 0,625 | 512024 | 651462 | 394 | 17291 | 305 | 56,7 | 645 |
| 3 | 1204 | 0,977 | 0,977 | 0,5 | 508514 | 653908 | 710 | 17457 | 289 | 59 | 913 |

FIG. 12

EP 4 641 488 A1

INPUT IMAGES 102

MEMORY
1320

PROCESSOR
1310

CALCIUM THRESHOLD
172

1300

FIG. 13

Europäisches
Patentamt

European
Patent Office

Office européen
des brevets

## EUROPEAN SEARCH REPORT

**Application Number**

EP 24 38 2433

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GARCIA-BERNA JOSE A ET AL: "Calcification detection of abdominal aorta in CT images and 3D visualization in VR devices", 2016 38TH ANNUAL INTERNATIONAL CONFERENCE OF THE IEEE ENGINEERING IN MEDICINE AND BIOLOGY SOCIETY (EMBC), IEEE, 16 August 2016 (2016-08-16), pages 4157-4160, XP032980083, DOI: 10.1109/EMBC.2016.7591642 [retrieved on 2016-10-13] * page 4157, right-hand column, paragraphs 2,3 * * page 4158, right-hand column, paragraph 2; figures 2,5 * | 1-12 | INV. G06T7/00 G06T7/11 G06T7/136 G06T7/155 |
| A | MATTHIAS TESSMANN ET AL: "Automatic detection and quantification of coronary calcium on 3D CT angiography data", COMPUTER SCIENCE - RESEARCH AND DEVELOPMENT ; COMPUTER SCIENCE - RESEARCH AND DEVELOPMENT ORGAN DER FACHBEREICHE SOFTWARETECHNIK, DATENBANKEN UND INFORMATIONSSYSTEME DER GESELLSCHAFT FÃ1?4R INFORMATIK E.V. (GI), SPRINGER-VERLAG, BERLIN/HEIDELBERG, vol. 26, 11 August 2010 (2010-08-11), pages 117-124, XP019875671, ISSN: 1865-2042, DOI: 10.1007/S00450-010-0131-3 * page 119, right-hand column, paragraph 2-5 * * page 120, left-hand column, paragraphs 1,2,3,4 - page 120, right-hand column, paragraphs 1,2,3,4; figure 4 * | 1-12 | TECHNICAL FIELDS SEARCHED (IPC) G06T |

-/--

The present search report has been drawn up for all claims

| Place of search | Date of completion of the search | Examiner |
|---|---|---|
| Munich | 14 June 2024 | Dirscherl, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number

EP 24 38 2433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARKIEWICZ T ET AL: "Computerized System for Quantitative Assessment of Atherosclerotic Plaques in the Femoral and Iliac Arteries Visualized by Multislice Computed Tomography", IEEE TRANSACTIONS ON BIOMEDICAL ENGINEERING, IEEE, USA, vol. 62, no. 6, 15 January 2015 (2015-01-15), pages 1490-1502, XP011581723, ISSN: 0018-9294, DOI: 10.1109/TBME.2015.2392254 [retrieved on 2015-05-18] * page 1492, left-hand column, paragraphs 3,4,5 - page 1492, right-hand column, paragraphs 1,2,3,4 * * page 1493, left-hand column, paragraphs 1,2,3,4 - page 1493, right-hand column, paragraphs 1,2,3,4; figure 4 * * page 1494, left-hand column, paragraphs 1,2,3 - page 1494, right-hand column, paragraphs 1,2; figure 5; table 2 * ----- | 1-12 | |
| A | MARKIEWICZ T ET AL: "Recognition of atherosclerotic plaques and their extended dimensioning with computerized tomography angiography imaging", INTERNATIONAL JOURNAL OF APPLIED MATHEMATICS AND COMPUTER SCIENCE, vol. 24, no. 1, 25 March 2014 (2014-03-25), pages 33-47, XP093173036, PL ISSN: 1641-876X, DOI: 10.2478/amcs-2014-0003 * the whole document * ----- -/-- | 1-12 | TECHNICAL FIELDS SEARCHED (IPC) |

The present search report has been drawn up for all claims

| Place of search | Date of completion of the search | Examiner |
|---|---|---|
| Munich | 14 June 2024 | Dirscherl, M |

EPO FORM 1503 03.82 (P04C01)

Europäisches
Patentamt

European
Patent Office

Office européen
des brevets

## EUROPEAN SEARCH REPORT

**Application Number**

EP 24 38 2433

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARKIEWICZ T ET AL: "Thresholding techniques for segmentation of atherosclerotic plaque and lumen areas in vascular arteries", BULLETIN OF THE POLISH ACADEMY OF SCIENCES TECHNICAL SCIENCES, vol. 63, no. 1, 1 March 2015 (2015-03-01), pages 269-280, XP093173033, ISSN: 2300-1917, DOI: 10.1515/bpasts-2015-0031 [retrieved on 2024-06-11] * the whole document * | 1-12 | |
| A | US 2023/394662 A1 (MIN JAMES K [US] ET AL) 7 December 2023 (2023-12-07) * the whole document * | 1-12 | |
| A | US 8 958 618 B2 (MASOOD SAAD [GB]; MOHR BRIAN [GB] ET AL.) 17 February 2015 (2015-02-17) * the whole document * | 1-12 | |
| A | US 2009/136107 A1 (ARNOLD BEN A [US] ET AL) 28 May 2009 (2009-05-28) * the whole document * | 1-12 | TECHNICAL FIELDS SEARCHED (IPC) |
| A | HALEVI ROTEM ET AL: "Progressive aortic valve calcification: Three-dimensional visualization and biomechanical analysis", JOURNAL OF BIOMECHANICS, PERGAMON PRESS, NEW YORK, NY, US, vol. 48, no. 3, 18 December 2014 (2014-12-18), pages 489-497, XP029189851, ISSN: 0021-9290, DOI: 10.1016/J.JBIOMECH.2014.12.004 * the whole document * | 1-12 | |

The present search report has been drawn up for all claims

| Place of search | Date of completion of the search | Examiner |
|---|---|---|
| Munich | 14 June 2024 | Dirscherl, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2433

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | | Publication date | Patent family member(s) | | Publication date |
|---|---|---|---|---|---|
| US 2023394662 | A1 | 07-12-2023 | US | 2023289963 A1 | 14-09-2023 |
| | | | US | 2023394662 A1 | 07-12-2023 |
| | | | US | 2023394663 A1 | 07-12-2023 |
| | | | US | 2023401710 A1 | 14-12-2023 |
| | | | US | 2023401711 A1 | 14-12-2023 |
| | | | US | 2023419487 A1 | 28-12-2023 |
| | | | US | 2023419488 A1 | 28-12-2023 |
| | | | WO | 2023172970 A1 | 14-09-2023 |
| US 8958618 | B2 | 17-02-2015 | CN | 103514597 A | 15-01-2014 |
| | | | JP | 2014008402 A | 20-01-2014 |
| | | | US | 2014003701 A1 | 02-01-2014 |
| US 2009136107 | A1 | 28-05-2009 | AU | 2002348241 A1 | 10-06-2003 |
| | | | EP | 1451753 A2 | 01-09-2004 |
| | | | US | 2003176780 A1 | 18-09-2003 |
| | | | US | 2008273652 A1 | 06-11-2008 |
| | | | US | 2009136107 A1 | 28-05-2009 |
| | | | US | 2011229002 A1 | 22-09-2011 |
| | | | WO | 03046833 A2 | 05-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SERRA J.** Image Analysis and Mathematical Morphology. Academic Press, 1982